# EUROPEAN PATENT SPECIFICATION

(11) **EP 0 872 666 B1**
(45) Date of publication and mention of the grant of the patent: **18.09.2002**
(21) Application number: 98104186.6
(22) Date of filing: 09.03.1998
(51) Int. Cl.: F16H 59/02, F16H 61/18

(54) **Shift lever unit for manual transmission**
Schalthebel- Einheit für Handschaltgetriebe
Ensemble de levier de changement de viteses pour transmission manuelle

(30) Priority: 17.04.1997 JP 10054097
(43) Date of publication of application: 21.10.1998
(73) Proprietor: NISSAN MOTOR COMPANY, LIMITED, Yokohama-shi, Kanagawa 221-0023 (JP)
(72) Inventor: Niimi, Tsutomu, Isehara-shi, Kanagawa 259-1141 (JP); Kaneda, Masahiko, Yokohama-shi, Kanagawa 241-0826 (JP); Kawasaki, Masami, Hiratsuka-shi, Kanagawa 354-0905 (JP)
(74) Representative: Grünecker, Kinkeldey, Stockmair & Schwanhäusser Anwaltssozietät

(56) References cited:
- EP-A- 0 137 941
- US-A- 3 597 992
- US-A- 4 018 099

## Description

The present invention relates to a shift lever unit for a manual transmission according to the preamble part of claim 1 and to a motor vehicle according to the preamble part of claim 10.

For ease of description, the shift lever unit having a pull-reverse mechanism will be referred to as a pull-reverse type shift lever unit in the following.

Hitherto, in the field of wheeled motor vehicles having a manual transmission mounted therein, various pull-reverse type shift lever units have been proposed and put into practical use. However, due to inherent construction, some of them have failed to satisfy users. In fact, when practically used, some of the conventional units tend to cause the vehicle cabin to smell of oil. This undesired phenomenon becomes severe with increase of time for which the motor vehicle is used. Inventors have revealed that the main cause of such smelling is a so-called smell carrying passage which would appear when the shift lever unit is mounted on the transmission. That is, the vehicle cabin becomes communicated with the interior of the transmission through the passage. Sometimes, hollow parts of the pull-reverse mechanism constitute part of the smell carrying passage.

Such drawback will be well understood when referring to Fig. 3 which shows a four-wheel drive motor vehicle equipped with a manual transmission controlled by a conventional pull-reverse type shift lever unit 100. The vehicle has an engine 200, a manual transmission 300 and a transfer 400 which are arranged in the illustrated manner. Above and over the transfer 400, there extends a vehicle floor 500. The shift lever unit 100 is mounted on the transfer 400 having a hollow shift lever proper 100a thereof projected upward through an opening formed in the vehicle floor 500. When the shift lever proper 100a is manipulated, the movement of the same is transmitted, through a known link mechanism in the transfer 400, to one of shift forks installed in the transmission 300 thereby to establish a certain gear ratio of the transmission.

However, in this arrangement, the interior of the hollow shift lever proper 100a tends to constitute part of the undesired smell carrying passage through which the vehicle cabin is communicated with the interior of the transfer 400.

From EP 0137941 a shift lever unit as mentioned above is known, comprising an interlock means for preventing the reverse gear to be switched into an actuator member for said interlock means.

It is an objective of the present invention to improve a shift lever unit for a manual transmission and a motor vehicle of the kind mentioned above, in which introduction of smells from the transmission to the vehicle cabin through the aperture the shift lever of the transmission projects is prevented or at least suppressed.

Said objective according to the present invention is performed by the features of the respective independent claims 1 and 10.

Accordingly, there is provided a pull-reverse type shift lever for a manual transmission, which is equipped with a so-called smell shutting structure by which the vehicle cabin and the interior of the transmission are isolated.

In the following, the present invention is explained in greater detail subject to several embodiments thereof in conjunction with the accompanying drawings, wherein:
Fig. 1 is a sectional view of a pull-reverse type shift lever unit, showing a shift lever proper thereof projected upward from a vehicle floor;
Fig. 2 is a plan view of a knob mounted on a top of the shift lever proper of the unit; and
Fig. 3 is an illustration of a four-wheel drive motor vehicle which is equipped with a manual transmission controlled by a conventional pull-reverse type shift lever unit.

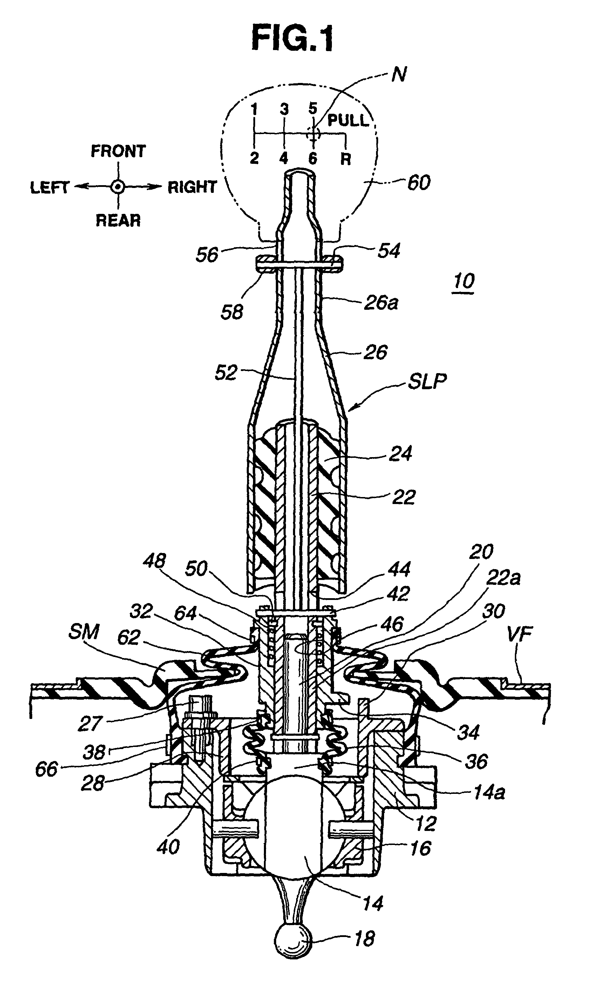

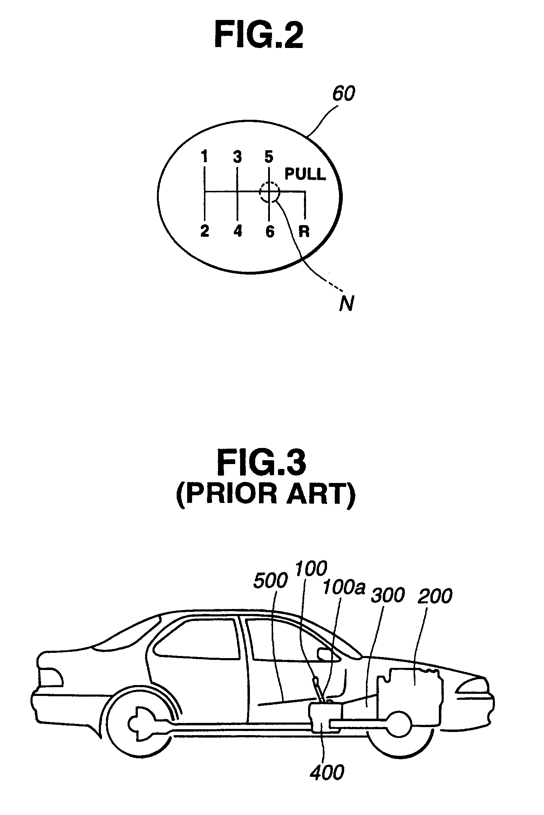

Referring to Figs. 1 and 2, particularly Fig. 1, there is shown a pull-reverse type shift lever unit, which is generally designated by numeral 10.

It is to be noted that the sectional view of Fig. 1 is taken from the rear of the shift lever unit 10 mounted in a vehicle cabin. In Fig. 1, the pull-reverse type shift lever unit 10 is shown having a shift lever proper "SLP" thereof projected upward from a vehicle floor "VF". The vehicle floor "VF" has thus an opening (no numeral) through which the shift lever proper "SLP" projects upward. An apertured seal member "SM" of elastic material is fitted to a periphery of the vehicle floor opening. Although not shown in the drawing, an associated manual transmission of six forward speeds and one reverse type is positioned below the. vehicle floor "VF" having a rear end thereof located near the opening of the vehicle floor "VF".

The shift lever unit 10 comprises a holding case 12 which is steadily held by the rear end of the transmission under the opening of the vehicle floor "VF". Thus, the holding case 12 is inevitably exposed to the atmosphere filled with smell of oil.

Within a lower portion of the holding case 12, there is pivotally received a spherical member 14 through an insulator 16. The spherical member 14 is integrally formed with both a lower rod portion and an upper rod portion 20. The lower rod portion has a smaller spherical part 18 at a leading end thereof. A cylindrical portion 14a is integrally formed between the spherical member 14 and the upper rod portion 20, as shown.

Although not shown in the drawing, the smaller spherical part 18 is pivotally received in a socket of a movement transmission mechanism incorporated with shift forks of the manual transmission.

The upper rod portion 20 of the spherical member 14 is tightly received in a lower part 22a of an inner pipe member 22. Thus, the spherical member 14 and the inner pipe member 22 move together like a single unit. The inner pipe member 22 has an upper part projected upward through the opening of the vehicle floor "VF".

The upper part of the inner pipe member 22 is received through an insulating rubber block 24 in a lower part of an outer pipe member 26. The outer pipe member 26 has a diametrically reduced upper cylindrical portion 26a.

It is thus to be noted that the spherical member 14, the inner pipe member 22, the rubber block 24 and the outer pipe member 26 constitute the shift lever proper "SLP" which can pivot about the center of the spherical member 14 relative to the holding case 12. That is, the shift lever proper "SLP" pivots leftward and rightward as viewed in Fig. 1 to make a select movement and pivots forward and rearward to make a shift movement. Due to provision of the insulating rubber block 24, undesired vibration transmission from the spherical member 14 to the outer pipe member 26 is minimized. Furthermore, due to the elasticity of the rubber block 24, manipulation of the shift lever proper "SLP" is softly carried out with a comfortable operation feeling.

The rightward pivoting of the shift lever proper "SLP" is limited due to provision of a pull-reverse mechanism which will be described in the following.

Within an upper portion of the holding case 12, there is steadily installed through a bolt 27 a gate member 28 which has at its right upper portion a reverse gate 30 projected upward. An outer sleeve 32 is slidably disposed on the lower part 22a of the inner pipe member 22. The outer sleeve 32 has a radial projection 34 directed toward the reverse gate 30.

It is to be noted that when the outer sleeve 32 assumes an after-mentioned lower position as shown in Fig. 1, the radial projection 34 is positioned at substantially the same level as the reverse gate 30, while, when the outer sleeve 32 assumes an after-mentioned upper position, the radial projection 34 is positioned higher than the reverse gate 30.

An inner boot 36 extends from a lower end of the outer sleeve 32 to the cylindrical portion 14a of the spherical member 14. That is, the inner boot 36 has an upper end fixed to the lower end of the outer sleeve to achieve a hermetical sealing therebetween and a lower end fixed to the cylindrical portion to achieve a hermetical sealing therebetween. As shown, the inner boot 36 has a bellows like structure. For connecting the inner boot 36 to the outer sleeve 32 and the cylindrical portion 14a, two fastening bands 38 and 40 are used, as shown. If desired, in place of the inner boot 36, an 0-ring or an oil seal member may be employed. That is, in this case, such member is operatively disposed between the lower part 22a of the inner pipe member 22 and the outer sleeve 32.

An upper end of the outer sleeve 32 is connected through bolts (no numerals) to a lower horizontal pin 42 which horizontally passes through an opening 44 formed in a middle part of the inner pipe member 22. The opening 44 is so sized as to permit a certain axial movement of the lower horizontal pin 42 therein. An upper portion of the outer sleeve 32 is formed in its inner wall with an annular recess 46 into which a coil spring 48 is concentrically received. The coil spring 48 is compressed between a lower end wall of the annular recess 46 and a stopper ring 50 fixed to the inner pipe member 22 just below the opening 44. With the force of the spring 48, the outer sleeve 32 is biased downward to assume the lower position as shown in Fig. 1.

A wire 52 extends upward from the lower horizontal pin 42 through the interior of the inner pipe member 22 to an upper horizontal pin 54 which horizontally passes through an opening 56 formed in the upper cylindrical portion 26a of the outer pipe member 26. If desired, a rod made of metal or plastics may be used in place of the wire 52. The opening 56 is so sized as to permit a certain axial movement of the upper horizontal pin 54 therein. A pull ring 58 is fixed to exposed ends of the upper horizontal pin 54 to move therewith. A knob 60 is fixed to a top of the outer pipe member 26, just above the opening 56 of the outer pipe member 26.

An outer boot 62 extends from an upper end of the outer sleeve 32 to an upper portion of the holding case 12. That is, the outer boot 62 has an upper end fixed to the upper end of the outer sleeve 32 to achieve a hermetical sealing therebetween and a lower end fixed to the upper portion of the holding case 12 to achieve a hermetical sealing therebetween. As shown, the outer boot 62 has a bellows like structure. For connecting the outer boot 62 to the outer sleeve 32 and the holding case 12, two fastening bands 64 and 66 are used. As shown, the outer boot 62 has a diametrically reduced middle portion in which a periphery of the circular center opening of seal member "SM" is intimately received to achieve a hermetical sealing therebetween.

In the following, operation of the pull-reverse type shift lever unit 10 of the invention will be described with reference to Figs. 1 and 2.

For ease of understanding, the description will be commenced with respect to a neutral condition of the unit 10 as is shown in Fig. 1. As may be understood from Fig. 2, under this neutral condition, the shift lever proper "SLP" assumes "N" position defined between a gate for the fifth speed and that of the sixth speed.

When now, with the intention of achieving the first, second, third or fourth speed, a driver pushes the shift lever proper "SLP" leftward, the shift lever proper "SLP" is pivoted leftward about the center of the spherical member 14 to a desired select position. When, with the shift lever proper "SLP" assuming the desired select position, the driver pushes the same forward or backward, the shift lever proper "SLP" is pivoted forward or rearward to a desired shift position, that is, the first, second, third or fourth speed position.

When, with the shift lever proper "SLP" assuming the "N" position, the driver pushes the same forward or rearward, the shift lever proper "SLP" is pivoted forward or rearward to achieve the fifth or sixth speed position.

When, with the shift lever proper "SLP" assuming the "N" position, the driver pushes the same rightward, the shift lever proper "SLP" is pivoted but slightly in the same direction. That is, in this case, the radial projection of the outer sleeve 32 is instantly brought into abutment with the reverse gate 30 thereby suppressing further pivoting of the shift lever proper "SLP" in the same direction. That is, in this case, the shift lever proper "SLP" is not permitted to pivot to a select position for the reverse. That is, even when the driver pushes the shift lever proper "SLP" rightward, the careless-reverse-shifting is not carried out.

In order to operatively carry out the reverse-shifting of the shift lever proper "SLP", the rightward pivoting of the shift lever proper "SLP" should be carried out while pulling up the pull ring 58.

That is, by pulling up the pull ring 58 against the force of the coil spring 48, the outer sleeve 32 is moved upward to the upper position where the radial projection 34 is largely separated away from the reverse gate 30. Thus, in this case, the rightward pivoting of the shift lever proper "SLP" from the "N" position is permitted without inducing the abutment of the radial projection 34 with the reverse gate 30. Thus, subsequent rearward pivoting of the shift lever proper "SLP" induces the reverse condition of the transmission. When the shift lever proper "SLP" is in the reverse position "R", the radial projection 34 is put on the reverse gate 30.

When, with the intention of achieving the neutral position or one of the above-mentioned forward speed positions, the driver pushes the shift lever proper "SLP" forward from the reverse position "R" and then pushes the same leftward, the radial projection 34 is disengaged from the reverse gate 30. With this, the outer sleeve 32 is moved down to the lower position due to the force of the coil spring 48, and thus, the pull ring 58 is moved back to its inoperative lower position.

In the following, advantages of the pull-reverse type shift lever unit 10 will be described.

First the undesired smell carrying passage is not produced even though the lower part, that is, the holding case 12 of the shift lever unit 10 is exposed to the atmosphere which is filled with smell of oil. That is, as is seen from Fig. 1, the outer boot 62, the outer sleeve 32, the inner sleeve 36 and the cylindrical portion 14a of the spherical member 14 constitute a so-called smell shutting structure. It is to be noted that the smell shutting function of the structure is kept even when the outer sleeve 32 is moved up to the upper position. Accordingly, the vehicle cabin is protected from the attack of oil smelling. Due to the intimate contact between the outer boot 62 and the sealing member "SM", the hermetical sealing therebetween is assured, which promotes the smell shutting function of the structure.

Second, since the inner boot 36 and the outer boot 62 are of a bellows type, the axial movement of the outer sleeve 32 on the inner pipe member 22 is smoothly carried out permitting the driver to pull up the pull ring 58 with a reduced force.

Third, since the coil spring 48 is snugly received in the annular space 46 defined between the annular wall of the annular recess 46 of the outer sleeve 32 and the outer wall of the lower part 22a of the inner pipe member 22, buckling of the spring 48 is suppressed or at least minimized.

## Claims

1. Shift lever unit (10) for a manual transmission, comprising:
a holding case (12) having a reverse gate (30) connected thereto;
a spherical member (14) pivotally installed in said holding case (12);
a shift lever proper (SLP) extending upward from said spherical member (14), said shift lever proper (SLP) having an axially extending hollow formed therein, said shift lever proper (SLP) being formed at axially spaced portions with upper and lower radial openings (56, 44);
an outer sleeve (32) axially movably disposed on said shift lever proper (SLP) between said spherical member (14) and said lower opening (44), said outer sleeve (32) being movable between predetermined upper and lower positions relative to said shift lever proper (SLP), said outer sleeve (32) having a radial projection (34) near said reverse gate (30), said radial projection (34) being so sized and constituted that when said shift lever proper (SLP) is pivoted slightly toward said reverse gate (30) with said outer sleeve (32) assuming the lower position, said radial projection (34) of said outer sleeve (32) is brought into abutment with said reverse gate (30) thereby to suppress further pivoting of said shift lever proper (SLP) in the same direction;
upper and lower horizontal members (54, 42) respectively accommodated in said upper and lower openings (56, 44) in a manner to move therein in an axial direction of said shift lever proper (SLP), said lower horizontal member (42) having axially opposed ends which are exposed to the outside of said shift lever proper (SLP) and secured to an upper portion of said outer sleeve (32);
a connecting member (52) extending in said shift lever proper (SLP) and connecting said upper and lower horizontal members (54, 42) to move together with the same;
a spring member (48) for biasing said outer sleeve (32) toward said lower position,
**characterized in that** a flexible sealing member (36) extending between a lower portion of said outer sleeve (32) and an upper portion of said spherical member (14) to achieve a hermetical sealing therebetween, said sealing member (36) being constructed to permit the movement of said outer sleeve (32) relative to said shift lever proper (SLP), and an outer boot (62) covering said sealing member (36), said outer boot (62) having an upper end fixed to an upper portion of said outer sleeve (32) to achieve a hermetical sealing therebetween and a lower end fixed to said holding case (12) to achieve a hermetical sealing therebetween, said outer boot (62) being flexible to permit the movement of said outer sleeve (32) relative to said shift lever proper (SLP).

2. Shift lever unit (10) according to claim 1, **characterized in that** the upper portion of said outer sleeve (32) to which the upper end of said outer boot (62) is fixed is positioned just below the upper portion of said outer sleeve (32) to which said lower horizontal member (42) is secured.

3. Shift lever unit (10) according to claim 1, **characterized in that** said sealing member (36) is an inner boot, said inner boot (36) having an upper end fixed to the lower portion of said outer sleeve (32) to achieve a hermetical sealing therebetween and a lower end fixed to the upper portion of said spherical member (14) to achieve a hermetical sealing therebetween.

4. Shift lever unit (10) according to claim 1, **characterized in that** said spring member (48) is a coil spring which is coaxially disposed in an annular space (46) defined between said outer sleeve (32) and said shift lever proper (SLP).

5. Shift lever unit (10) according to claim 4, **characterized in that** said annular space (46) is an annular recess formed in a cylindrical inner wall of said outer sleeve (32), said coil spring (48) having a lower end abutting against a lower end wall of said annular recess (46) and an upper end abutting against a stopper ring (50) fixed to said inner pipe member (22).

6. Shift lever unit (10) according to claim 5, **characterized in that** said stopper ring (50) is fixed to said inner pipe member (22) at a position just below said lower opening (44).

7. Shift lever unit (10) according to claim 1, **characterized in that** said shift lever proper (SLP) comprises:
an inner pipe member (22) having a lower portion (22a) about which said outer sleeve (32) is axially movably disposed, said inner pipe member (22) having said lower opening (44) formed therein;
an outer pipe member (26) which has a lower portion concentrically disposed around an upper portion of said inner pipe member (22), said outer pipe member (26) having said upper opening (56) formed in an upper cylindrical portion (26a) thereof;
an insulating rubber block (24) disposed and compressed between said upper portion of said inner pipe member (22) and said lower portion of said outer pipe member (26); and
a knob (60) mounted on a top of said outer pipe member (26).

8. Shift lever unit (10) according to claim 1, **characterized in that** said connecting member (52) is a wire or rod.

9. Shift lever unit (10) according to claim 2, **characterized in that** said outer and inner boots (62, 36) are of a bellows type.

10. Motor vehicle having a vehicle floor (VF), a manual transmission located below said vehicle floor (VF) and an opening formed in said vehicle floor,
a holding case (12) steadily arranged below said opening, said holding case (12) having a reverse gate (30) connected thereto, said holding case being exposed to an atmosphere filled with smell of oil;
a spherical member (14) pivotally installed in said holding case (12);
a shift lever proper (SLP) extending upward from said spherical member (14) to a position above said vehicle floor (VF) through said opening, said shift lever proper (SLP) having an axially extending hollow formed therein, said shift lever proper (SLP) being formed at axially spaced portions with upper and lower radial opening (56, 44);
an outer sleeve (32) axially movably disposed on said shift lever proper (SLP) between said spherical member (14) and said lower opening (44), said outer sleeve (32) being movable between predetermined upper and lower positions relative to said shift lever proper (SLP), said outer sleeve (32) having a radial projection (34) near said reverse gate (30), said radial projection (34) being so sized and constructed that when said shift lever proper (SLP) is pivoted slightly toward said reverse gate (30), with said outer sleeve (32) assuming the lower position, said radial projection (34) is brought into abutment with said reverse gate (30) thereby to suppress further pivoting of said shift lever proper (SLP) in the same direction;
upper and lower horizontal members (54, 42) respectively received in said upper and lower openings (56, 44) in a manner to be movable therein in an axial direction of said shift lever proper (SLP), said lower horizontal member (42) having axially opposed ends which are exposed to the outside of said shift lever proper (SLP) and secured to an upper end of said outer sleeve (32);
a connecting member (52) extending in said shift lever proper (SLP) and connecting said upper and lower horizontal members (54, 42) to move together with the same;
a spring member (48) for biasing said outer sleeve (32) toward said lower position,
**characterized in that** an inner boot (36) having an upper end fixed to a lower portion of said outer sleeve (32) to achieve a hermetical sealing therebetween and a lower end fixed to an upper portion of said spherical member (14) to achieve a hermetical sealing therebetween, said inner boot (36) being flexible to permit the movement of said outer sleeve (32) relative to said shift lever proper (SLP), an outer boot covering said inner boot (36), said outer boot (62) having an upper end fixed to an upper portion of said outer sleeve (32) to achieve a hermetical sealing therebetween and a lower end fixed to said holding case (12) to achieve a hermetical sealing therebetween, said outer boot (62) being flexible to permit the movement of said outer sleeve (32) relative to said shift lever proper (SLP), and an apertured seal member (SM) of elastic material fitted in the opening of said vehicle floor (VF) in such a manner that the opening of the seal member (SM) intimately receives therein a part of said outer boot (62).

## Patentansprüche

1. Schalthebeleinheit (10) für ein manuell betätigtes Getriebe, mit:
einem Befestigungsgehäuse (12), das daran verbunden einen Rückwärtsdurchlaß (30) hat,
einem Kugelteil (14), schwenkbar in dem Befestigungsgehäuse (12) installiert;; einem eigentlichen Schalthebel (SLP), der sich nach oben von dem Kugelteil (14) erstreckt,
wobei der eigentliche Schalthebel (SLP) einen sich axial in diesem erstreckenden Hohlraum aufweist, wobei der eigentliche Schalthebel (SLP) an axial beabstandeten Abschnitten mit oberen und unteren radialen Öffnungen (56, 44) versehen ist;
einer äußeren Hülse (32), axial beweglich auf dem eigentlichen Schalthebel (SLP) zwischen dem Kugelteil (14) und der unteren Öffnung (44) angeordnet, wobei die äußere Hülse (32) zwischen vorbestimmten oberen und unteren Positionen in Bezug zu dem eigentlichen Schalthebel (SLP) beweglich ist, die äußere Hülse (32) einen radialen Vorsprung (34) nahe des Rückwärtsdurchlasses (30) hat, wobei der radiale Vorsprung (34) so bemessen und gebildet ist, daß wenn der eigentliche Schalthebel (SLP) leicht in Richtung des Rückwärtsdurchlasses (30) mit der äußeren Hülse (32), die die untere Position einnimmt, geschwenkt wird, wird der radiale Vorsprung (34) der äußeren Hülse (32) in Anlage mit dem Rückwärtsdurchlaß (30) gebracht, um dadurch weiteres Schwenken des eigentlichen Schalthebels (SLP) in dieselbe Richtung zu unterdrücken;
oberen und unteren Horizontalteilen (54, 42), jeweils in den oberen und unteren Öffnungen (56, 54) in einer Weise aufgenommen, sich darin in axialer Richtung des eigentlichen Schalthebels (SLP) zu bewegen, wobei das untere horizontale Teil (42) axial gegenüberliegende Enden hat, die zu der Außenseite des eigentlichen Schalthebels (SLP) ausgesetzt und an dem oberen Abschnitt der äußeren Hülse (32) befestigt sind;
einem Verbindungsteil (52), das sich in dem eigentlichen Schalthebel (SLP) erstreckt und das die oberen und unteren horizontalen Teile (54, 42) verbindet, um sich mit denselben zusammen zu bewegen;
einem Federteil (48) zum Vorspannen der äußeren Hülse (32) in Richtung der unteren Position,
**dadurch gekennzeichnet, daß** ein flexibles Dichtungsteil (36), das sich zwischen einem unteren Abschnitt der äußeren Hülse (32) und einem oberen Abschnitt des Kugelteiles (14) erstreckt, um dazwischen ein hermetisches Abdichten zu erreichen, vorgesehen ist, wobei das Dichtungsteil (36) gebildet, um ist die Bewegung der äußeren Hülse (32) relativ zu dem eigentlichen Schalthebel (SLP) zu gestatten, und mit einer äußere Schutzkappe (62), die ein oberes Ende hat, das an dem oberen Abschnitt der äußeren Hülse (32)befestigt ist, um dazwischen ein hermetisches Abdichten zu erreichen, und ein unteres Ende, befestigt an dem Befestigungsgehäuse (12), um dazwischen ein hermetisches Abdichten zu erreichen, wobei die äußere Schutzkappe (62) flexibel montiert ist, um die Bewegung der äußeren Hülse (32) relativ zu dem eigentlichen Schalthebel (SLP) zu gestatten.

2. Schalthebeleinheit (10) nach Anspruch 1, **dadurch gekennzeichnet, daß** der obere Abschnitt der äußeren Hülse (32), an dem das obere Ende der äußeren Schutzkappe (62) befestigt ist, unmittelbar unter dem oberen Abschnitt der äußeren Hülse (32) befestigt ist, an dem das untere horizontale Teil (42) befestigt ist.

3. Schalthebeleinheit (10) nach Anspruch 1, **dadurch gekennzeichnet, daß** das Dichtungsteil (36) eine innere Schutzhülle ist, wobei die innere Schutzhülle (36) ein oberes Ende hat, befestigt an dem unteren Abschnitt der äußeren Hülse (32), um dazwischen ein hermetisches Abdichten zu erreichen, und ein unteres Ende, befestigt an dem oberen Abschnitt des Kugelteiles (14), um dazwischen ein hermetisches Abdichten zu erreichen.

4. Schalthebeleinheit (10) nach Anspruch 1, **dadurch gekennzeichnet, daß** das Federteil (48) eine Schraubenfeder ist, die koaxial in einem ringförmigen Raum (46), gebildet zwischen der äußeren Hülse (32) und dem eigentlichen Schalthebel (SLP), angeordnet ist.

5. Schalthebeleinheit (10) nach Anspruch 4, **dadurch gekennzeichnet, daß** der ringförmige Raum (46) eine ringförmige Ausnehmung ist, gebildet in einer zylindrischen Innenwand der äußeren Hülse (32), wobei die Schraubenfeder (48) ein unteres Ende hat, das gegen eine untere Endwand der ringförmige Ausnehmung (46) anliegt, und ein oberes Ende, das gegen einen Anschlagring (50) anliegt, mit dem Innenrohrteil (22) befestigt ist.

6. Schalthebeleinheit (10) nach Anspruch 5, **dadurch gekennzeichnet, daß** der Anschlagring (50) an dem Innenrohrteil (22) in einer Position unmittelbar unter der unteren Öffnung (44) befestigt ist.

7. Schalthebeleinheit (10) nach Anspruch 1, **dadurch gekennzeichnet, daß** der eigentliche Schalthebel (SLP) aufweist:
ein Innenrohrteil (22), das einen unteren Abschnitt (22a) hat, über dem die äußere Hülse (32) axial beweglich angeordnet ist, das Innenrohrteil (22), das die darin gebildete untere Öffnung (44) hat;
ein Außenrohrteil (26), das einen unteren Abschnitt hat, konzentrisch um einen oberen Abschnitt des Innenrohrteiles (22) angeordnet, wobei das Außenrohrteil (26), das die obere Öffnung (56) hat, in einem oberen zylindrischen Abschnitt (26a) dessen gebildet ist;
einen isolierenden Gummiblock (24), angeordnet und zusammengedrückt zwischen dem oberen Abschnitt des Innenrohrteiles (22) und dem unteren Abschnitt des Außenrohrteiles (26).

8. Schalthebeleinheit (10) nach Anspruch 1, **dadurch gekennzeichnet, daß** das Verbindungsteil (52) ein Draht oder eine Stange ist.

9. Schalthebeleinheit (10) nach Anspruch 2, **dadurch gekennzeichnet, daß** die äußere und die innere Schutzkappe (62, 36) von einem glockenförmigen Typ sind.

10. Kraftfahrzeug, mit einem Fahrzeugboden (VF), ein unter dem Fahrzeugboden (VF) angeordnetes manuell betätigtes Getriebe und eine in dem Fahrzeugboden gebildete Öffnung,
einem stabil unter der Öffnung angeordnetes Befestigungsgehäuse (12), wobei das Befestigungsgehäuse (12) einen darin verbundenen Rückwärtsdurchlaß (30) hat, wobei das Befestigungsgehäuse einer mit dem Geruch von Öl gefüllten Atmosphäre ausgesetzt ist;
einem Kugelteil (14), schwenkbar in dem Befestigungsgehäuse (12) installiert;
einem eigentlichen Schalthebel (SLP), der sich von dem Kugelteil (14) nach oben zu einer Position oberhalb des Fahrzeugbodens (VF) durch die Öffnung erstreckt, wobei der eigentliche Schalthebel (SLP) einen sich in diesemerstreckenden Hohlraum hat, wobei der eigentliche Schalthebel (SLP) an axial beabstandeten Abschnitten mit einer oberen und einer unteren radialen Öffnung (56, 44) versehen ist;
einer äußere Hülse (32), axial beweglich auf dem eigentlichen Schalthebel (SLP) zwischen dem Kugelteil (14) und der unteren Öffnung (44) angeordnet ist, wobei die äußere Hülse (329 zwischen vorbestimmten oberen und unteren Positionen relativ zu dem eigentlichen Schalthebel (SLP) angeordnet ist, wobei die äußere Hülse (32) einen radialen Vorsprung (34) nahe dem Rückwärtsdurchlaß (30) hat, wobei der radiale Vorsprung (34) so bemessen und aufgebaut ist, daß dann, wenn der eigentliche Schalthebel (SLP) leicht in Richtung des Rückwärtsdurchlaß (30) geschwenkt wird, mit der äußeren Hülse (32) die untere Position einnehmend, der radiale Vorsprung (34) in Anlage mit dem Rückwärtsdurchlaß (30) gebracht wird, um ein weiteres Schwenken des eigentlichen Schalthebel (SLP) in dieselbe Richtung zu unterdrücken;
oberen und unteren horizontalen Teilen (54, 42), jeweils in die oberen und unteren Öffnungen (54, 44) in einer Weise aufgenommen, um darin in einer axialen Richtung des eigentlichen Schalthebel (SLP) beweglich zu sein, wobei das horizontale Teil (42) axial gegenüberliegende Enden hat, die zu der Außenseite des eigentlichen Schalthebel (SLP) ausgesetzt und an den oberen Enden der äußeren Hülse (32) befestigt sind;
einem Verbindungsteil (52), das sich in dem eigentlichen Schalthebel (SLP) erstreckt und das die oberen und unteren Horizontalteile (54, 42) verbindet, um sich zusammen mit denselben zu bewegen;
einem Federteil (48) zum Vorspannen der äußeren Hülse (32) in Richtung der unteren Position,
**dadurch gekennzeichnet, daß** eine innere Schutzhülle (36) vorgesehen ist, die ein oberes Ende befestigt an einem unteren Abschnitt der äußeren Hülse (32) hat, um dazwischen ein hermetisches Abdichten zu erreichen, und ein unteres Ende, befestigt an einem oberen Abschnitt des Kugelteiles (14), um dazwischen ein hermetisches Abdichten zu erreichen, wobei die innere Schutzkappe (36) flexibel ist, um die Bewegung der äußeren Hülse (32) in Bezug auf den eigentlichen Schalthebel (SLP) zu gestatten, und eine äußere Schutzkappe (62), die ein oberes Ende hat, befestigt an einem oberen Abschnitt der äußeren Hülse (32), um dazwischen ein hermetisches Abdichten zu erreichen und ein unteres Ende, befestigt an dem Befestigungsgehäuse (12), um dazwischen ein hermetisches Abdichten zu erreichen, wobei die äußere Schutzkappe (62) flexibel ist, um die Bewegung der äußeren Hülse (32) in Bezug auf den eigentlichen Schalthebel (SLP) zu gestatten, und ein mit einer Öffnung versehenes Dichtungsteil (SM) aus elastischem Material, eingesetzt in die Öffnung des Fahrzeugbodens (VF) in solch einer Weise, daß die Öffnung des Dichtungsteiles (SM) darin eng einen Teil der äußeren Schutzkappe (62) aufnimmt.

## Revendications

1. Unité formant levier de changement (10) pour une transmission manuelle, comprenant :
un boîtier de fixation (12) comportant une coulisse de marche arrière (30) reliée à celui-ci ;
un élément sphérique (14) installé d'une manière pivotante dans ledit boîtier de fixation (12) ;
un levier de changement proprement dit (SLP) s'étendant vers le haut depuis ledit élément sphérique (14), ledit levier de changement proprement dit (SLP) présentant un creux s'étendant axialement formé dans celui-ci, ledit levier de changement proprement dit (SLP) présentant à des portions espacées axialement des ouvertures radiales supérieure et inférieure (56, 44) ;
un manchon externe (32) disposé d'une manière axialement mobile sur ledit levier de changement (SLP) entre ledit élément sphérique (14) et ladite ouverture inférieure (44), ledit manchon externe (32) étant déplaçable entre des positions supérieure et inférieure prédéterminées relativement audit levier de changement (SLP), ledit manchon externe (32) présentant une saillie radiale (34) à proximité de ladite coulisse de marche arrière (30), ladite saillie radiale (34) étant dimensionnée et constituée de façon que lorsque ledit levier de changement (SLP) est amené à pivoter légèrement vers ladite coulisse de marche arrière (30) et que ledit manchon externe (32) occupe la position inférieure, ladite saillie radiale (34) dudit manchon externe (32) est amenée en butée contre ladite coulisse de marche arrière (30) en supprimant ainsi un pivotement ultérieur dudit levier de changement (SLP) dans la même direction ;
des éléments horizontaux supérieur et inférieur (54, 42) logés respectivement dans lesdites ouvertures supérieure et inférieure (56, 44) de manière à se déplacer dans celles-ci dans une direction axiale dudit levier de changement (SLP), ledit élément horizontal inférieur (42) ayant des extrémités axialement opposées qui sont exposées à l'extérieur dudit levier de changement (SLP) et qui sont fixées à une portion supérieure dudit manchon extérieur (32) ;
un élément de connexion (52) s'étendant dans ledit levier de changement (SLP) et reliant lesdits éléments horizontaux supérieur et inférieur (54, 42) pour se déplacer conjointement avec ceux-ci ;
un élément formant ressort (48) pour solliciter ledit manchon externe (32) vers ladite position inférieure,
**caractérisée en ce qu'**il est prévu un élément d'étanchéité flexible (36) s'étendant entre une portion inférieure dudit manchon extérieur (32) et une portion supérieure dudit élément sphérique (14) pour atteindre une étanchéité hermétique entre ceux-ci, ledit élément d'étanchéité (36) étant construit pour permettre le déplacement dudit manchon externe (32) relativement audit levier de changement (SLP), et une botte externe (62) couvrant ledit élément d'étanchéité (36), ladite botte externe (62) ayant une extrémité supérieure fixée à une portion supérieure dudit manchon externe (32) pour obtenir une étanchéité hermétique entre ceux-ci ainsi qu'une extrémité inférieure fixée audit boîtier de fixation (2) pour obtenir une étanchéité hermétique entre ceux-ci, ladite botte externe (62) étant flexible pour permettre le déplacement dudit manchon externe (32) relativement audit levier de changement (SLP).

2. Unité formant levier de changement (10) selon la revendication 1, **caractérisée en ce que** la portion supérieure dudit manchon externe (32) à laquelle l'extrémité supérieure de ladite botte externe (62) est fixée, est positionnée juste en dessous de la portion supérieure dudit manchon externe (32) à laquelle ledit élément horizontal inférieur (42) est fixé.

3. Unité formant levier de changement (10) selon la revendication 1, **caractérisée en ce que** ledit élément d'étanchéité (36) est une botte interne, ladite botte interne (36) présentant une extrémité supérieure fixée à la portion inférieure dudit manchon externe (32) pour obtenir une étanchéité hermétique entre ceux-ci ainsi qu'une extrémité inférieure fixée à la portion supérieure dudit élément sphérique (14) pour obtenir une étanchéité hermétique entre ceux-ci.

4. Unité formant levier de changement (10) selon la revendication 1, **caractérisée en ce que** ledit élément de ressort (48) est un ressort hélicoïdal qui est disposé coaxialement dans un espace annulaire (46) défini entre ledit manchon externe (32) et ledit levier de changement (SLP).

5. Unité formant levier de changement (10) selon la revendication 4, **caractérisée en ce que** ledit espace annulaire (46) est un évidement annulaire ménagé dans une paroi cylindrique intérieure dudit manchon externe (32), ledit ressort hélicoïdal (48) présentant une extrémité inférieure butant contre une paroi d'extrémité inférieure dudit évidement annulaire (46) et une extrémité supérieure butant contre une bague d'arrêt (50) fixée audit élément de tuyau interne (22).

6. Unité formant levier de changement (10) selon la revendication 5, **caractérisée en ce que** ladite bague d'arrêt (50) est fixée audit élément de tuyau interne (22) à une position juste en dessous de ladite ouverture inférieure (44).

7. Unité formant levier de changement (10) selon la revendication 1, **caractérisée en ce que** ledit levier de changement proprement dit (SLP) comprend :
un élément de tuyau interne (22) présentant une portion inférieure (22a) autour de laquelle ledit manchon externe (32) est disposé d'une manière axialement mobile, ledit élément de tuyau interne (22) présentant ladite ouverture inférieure (44) formée dans celui-ci ;
un élément de tuyau externe (26) qui présente une portion inférieure disposée d'une manière concentrique autour d'une portion supérieure dudit élément de tuyau interne (22), ledit élément de tuyau externe (26) présentant ladite ouverture supérieure (56) ménagée dans une portion cylindrique supérieure (26a) de celui-ci ;
un bloc isolant en caoutchouc (24) disposé et comprimé entre ladite portion supérieure dudit élément de tuyau interne (22) et ladite portion inférieure dudit élément de tuyau externe (26) ; et
une poignée (60) montée sur le dessus dudit élément de tuyau externe (26).

8. Unité formant levier de changement (10) selon la revendication 1, **caractérisée en ce que** ledit élément de connexion (52) est un fil ou une tige.

9. Unité formant levier de changement (10) selon la revendication 2, **caractérisée en ce que** lesdites bottes externe et interne (62, 36) sont du type à soufflet.

10. Véhicule moteur présentant un plancher de véhicule (VF), une transmission manuelle située entre ledit plancher de véhicule (VF) et une ouverture ménagée dans ledit plancher de véhicule,
un boîtier de fixation (12) agencé fixement en dessous de ladite ouverture, ledit boîtier de fixation (12) présentant une coulisse de marche arrière (30) reliée à celui-ci, ledit boîtier de fixation étant exposé à une atmosphère remplie d'une odeur d'huile ;
un élément sphérique (14) installé d'une manière pivotante dans ledit boîtier de fixation (12) ;
un levier de changement proprement dit (SLP) s'étendant vers le haut depuis ledit élément sphérique (14) à une position au-dessus dudit plancher de véhicule (VF) à travers ladite ouverture, ledit levier de changement (SLP) ayant un creux s'étendant axialement formé dans celui-ci, ledit levier de changement proprement dit (SLP) présentant à des portions espacées axialement des ouvertures radiales supérieure et inférieure (56, 44) ;
un manchon externe (32) déplaçable axialement, disposé sur ledit levier de changement (SLP) entre ledit élément sphérique (14) et ladite ouverture inférieure (44), ledit manchon externe (32) étant déplaçable entre des positions supérieure et inférieure prédéterminées relativement audit levier de changement (SLP), ledit manchon externe (32) présentant une saillie radiale (34) à proximité de ladite coulisse de marche arrière (30), ladite saillie radiale (34) étant dimensionnée et construite de façon que lorsque ledit levier de changement (SLP) est amené à pivoter légèrement vers ladite coulisse de marche arrière (30), ledit manchon externe (32) occupant la position inférieure, ladite saillie radiale (34) est amenée en butée contre ladite coulisse de marche arrière (30) en supprimant ainsi un pivotement ultérieur dudit levier de changement (SLP) dans la même direction ;
des éléments horizontaux supérieur et inférieur (54, 42) reçus respectivement dans lesdites ouvertures supérieure et inférieure (56, 44) d'une manière à être déplaçables dans celles-ci dans une direction axiale dudit levier de changement (SLP), ledit élément horizontal inférieur (42) ayant des extrémités axialement opposées qui sont exposées à l'extérieur dudit levier de changement (SLP) et qui sont fixées à une extrémité supérieure dudit manchon externe (32) ;
un élément de connexion (52) s'étendant dans ledit levier de changement (SLP) et reliant lesdits éléments horizontaux supérieur et inférieur (54, 42) pour se déplacer conjointement avec ceux-ci ;
un élément de ressort (48) pour solliciter ledit manchon externe (32) vers ladite position inférieure,
**caractérisée en ce qu'**il est prévu une botte interne (36) présentant une extrémité supérieure fixée à une portion inférieure dudit manchon externe (32) pour obtenir une étanchéité hermétique entre ceux-ci ainsi qu'une extrémité inférieure fixée à une portion supérieure dudit élément sphérique (14) pour obtenir une étanchéité hermétique entre ceux-ci, ladite botte interne (36) étant flexible pour permettre le déplacement dudit manchon externe (32) relativement audit levier de changement (SLP), une botte externe couvrant ladite botte interne (36), ladite botte externe (62) présentant une extrémité supérieure fixée à une portion supérieure dudit manchon externe (32) pour obtenir une étanchéité hermétique entre ceux-ci ainsi qu'une extrémité inférieure fixée audit boîtier de fixation (12) pour obtenir une étanchéité hermétique entre ceux-ci, ladite botte externe (62) étant flexible pour permettre le déplacement dudit manchon externe (32) relativement audit levier de changement proprement dit (SLP), et un élément d'étanchéité à ouverture (SM) en un matériau élastique adapté dans l'ouverture dudit plancher de véhicule (VF) de telle manière que l'ouverture de l'élément d'étanchéité (SM) reçoit d'une manière bien ajustée dans celle-ci une partie de ladite botte externe (62).
